Europäisches Patentamt

European Patent Office

Office européen des brevets

(19)

(11) Veröffentlichungsnummer: **0 336 245**
**A2**

(12) **EUROPÄISCHE PATENTANMELDUNG**

(21) Anmeldenummer: 89105340.7

(22) Anmeldetag: 25.03.89

(51) Int. Cl.⁴: **H01M 4/36 , H01M 4/28 ,**
**C01G 51/00 , C01G 53/00 ,**
**H01M 4/52**

(30) Priorität: 08.04.88 DE 3811717

(43) Veröffentlichungstag der Anmeldung:
**11.10.89 Patentblatt 89/41**

(84) Benannte Vertragsstaaten:
**DE FR GB SE**

(71) Anmelder: **VARTA Batterie Aktiengesellschaft**
**Am Leineufer 51**
**D-3000 Hannover 21(DE)**

(72) Erfinder: **Glemser, Oskar, Prof.Dr.Drs.**
**Richard-Zsigmondy-Weg 10**
**D-3400 Göttingen(DE)**
Erfinder: **Buss, Dieter H., Dr.**
**Sollingstrasse 55 b**
**D-3400 Göttingen(DE)**
Erfinder: **Bauer, Jürgen, Dr.**
**Weinberg 18**
**D-3200 Hildesheim(DE)**
Erfinder: **Löw, Helga**
**Fliederweg 19**
**D-3400 Göttingen(DE)**

(74) Vertreter: **Kaiser, Dieter Ralf, Dipl.-Ing.**
**Gundelhardtstrasse 72**
**D-6233 Kelkheim/Ts.(DE)**

(54) **Positive Sammlerelektrode für Akkumulatoren mit alkalischem Elektrolyten.**

(57) Eine positive Sammlerelektrode, deren aktives Material aus einem Doppelhydroxid der allgemeinen Formel
$[M^{2+}_{(1-x)}Fe^{3+}x(OH)_2]^{x+}[(x/n)X^{n-},yH_2O]^{x-}$
besteht, in welcher ein Laufparameter $0,05 \leq x \leq 0,4$ vorzugsweise 0,2 ist, $M^{2+}$ vorzugsweise $Ni^{2+}$ ist und $X^{n-}$ für eine Anionart steht, zeigt im Vergleich zu analogen Doppelhydroxiden mit $X^{n-}$ für eine = $SO_4^{2-}$, $NO_3^-$ oder $CO_3^{2-}$ über die allen gemeinsame Eigenschaft der Immunität gegen Eisenverunreinigungen (daher "siderophile" Elektroden) hinausgehend eine bemerkenswerte Verbesserung im elektrischen Verhalten, wenn $X^{n-}$ zumindest anteilig von $PO_4^{3-}$ bzw. $HPO_4^{2-}$ gebildet ist. Die Qualitätsverbesserung kommt beim zyklischen Lade-/Entladebetrieb gegen eine $Cd/Cd(OH)_2$-Elektrode in einer über viele Zyklen andauernden Konstanz der spezifischen Entladekapazität auf hohem Niveau zum Ausdruck.

EP 0 336 245 A2

## Positive Sammlerelektrode für Akkumulatoren mit alkalischem Elektrolyten

Die Erfindung betrifft eine positive Sammlerelektrode für Akkumulatoren mit alkalischem Elektrolyten und Verfahren zu ihrer Herstellung.

Aus der DE-OS 35 20 108 ist bereits eine positive Sammlerelektrode bekannt, deren aktives Material aus einem Doppelhydroxid der allgemeinen Formel

$[M2^+_{(1-x)}Fe3^+_x(OH)_2]^{x+}[(x/n)X^{n\cdot}, yH_2O]^{x\cdot}$

besteht, in welcher der Laufparameter x Werte zwischen 0,05 und 0,4 annehmen kann, wobei $M2^+$ ein oxidier- und reduzierbares Kation und $X^{n\cdot}$ wenigstens eine beliebige Anionart zur Ladungskompensation des komplexen doppelhydroxidischen Kations ist. $M2^+$ steht darin vorzugsweise für $Ni^{2+}$ oder $Co^{2+}$, während $X^{n\cdot}$ etwa durch die Anionen $NO_3^-$, $SO_4^{2-}$ oder $CO_3^{2-}$ gebildet sein kann.

Die Auffindung dieses Doppelhydroxids und der Vorschlag seiner Verwendung als aktives Material für positive Elektroden in Stahlakkumulatoren stand im Zusammenhang mit einem langjährigen Bemühen, den schädlichen Einfluß von Eisenverunreinigungen auf die Funktion der Nickelelektrode einzudämmen. Hauptquelle der Eisenverunreinigungen ist im Falle des Edison-Akkumulators naturgemäß dessen negative Eisen/Eisenhydroxidelektrode selbst, aber auch die verschiedenartigen Elektrodenarmierungen in Ni/Cd-Akkumulatoren, seien es Trägergerüste aus vernickeltem Stahlband oder vernickelten Stahlfasermatten, geben, sobald die Nickelplattierung defekt oder porös geworden ist, zu Eisenausschüttungen Anlaß.

Man nimmt an, daß der schädliche Effekt des Eisens, der sich in einer Verringerung des Ladewirkungsgrads der Nickelelektrode bzw. in einem nicht der Volladung entsprechenden Oxidationszustand äußert, durch elektrophoretische Abscheidung von kolloiden Eisenaquoxidpartikeln mit drei- oder geringerwertigem Eisen an der Nickelhydroxidoberfläche beim Ladungsvorgang verursacht wird, indem sie der Elektrode eine geringere Sauerstoffüberspannung erteilen. Die Elektrode nimmt dadurch weniger Ladung auf.

Zu einigen Literaturquellen, welche diese Vorstellung belegen und auch die Entstehung der Eisenaquoxidpartikel im Elektrolyten erklären, wird hier auf die DE-OS 35 20 108 verwiesen.

Von großer Bedeutung für das bekannte Doppelhydroxid ist seine enge kristallchemische Verwandtschaft mit dem Mineral Pyroaurit, welches bei analoger Zusammensetzung die gleiche Doppelschichtstruktur besitzt, wobei lediglich die Stelle $M2^+$ im komplexen Kation durch $Mg^{2+}$ und $1/nX^{n\cdot 1}$ durch $1/2\ CO_3^{2-}$ eingenommen wird. Diese Doppelschichtstruktur (siehe bei R. Allmann, Chimia 24, 99-108 (1970)) leitet sich vom Brucitgitter des $\beta$-Ni $(OH)_2$ dadurch ab, daß die Nickellagen in den $M(OH)_2$-Schichten (M = Ni) auch von anderen Kationen $M2^+$ und $M3^+$, sofern diese annähernd gleich groß sind, in statistischer Verteilung eingenommen werden können. Dabei wird der durch die hochgeladenen 3wertigen Metallkationen in die Hauptschichten eingebrachte Ladungsüberschuß von den Anionen $X^-$ ausgeglichen. Diesen Ladungsausgleich begünstigen die ursprünglich mit einer Ladung -1 versehenen Hydroxyl-Ionen einer Hauptschicht dadurch, daß sie aufgrund der veränderten Umgebung von $M2^+$- und $M3^+$-Ionen eine Verringerung ihrer Bindungsstärke entsprechend einer Ladung < 1 erfahren, was sie befähigt, Ladungen > 1 zu kompensieren, wobei das H-Atom einer M-OH-Bindung teilweise durch ein anderes stark negatives Atom X gebunden wird. Das Ergebnis ist die Bildung von Wasserstoffbrücken O-H...X. Auf diese Weise werden $X^-$-Ionen zusammen mit $H_2O$-Molekülen zwischen die ursprünglichen Brucitschichten geschoben, so daß sich eine ionische Struktur mit einer Aufeinanderfolge von Hauptschichten aus

$[M2^+_{1-x}M3^+_x(OH)_2]^{x+}$-Schichtkationen und

$[x/nX^{n\cdot}, yH_2O]^{x\cdot}$-Zwischenschichtanionen

(daher "Doppelschichtstruktur")

ausbildet.

Wie sich in Versuchen mit elektrochemischen Testzellen des Ni/Fe- oder des Ni/Cd-Systems herausgestellt hatte, verhielten sich aus einem solchen Doppelhydroxid hergestellte Elektroden mit der beispielsweisen Bruttozusammensetzung $Ni_4Fe(OH)_{10}NO_3$, die sich nach der eingangs genannten allgemeinen Formel für x = 0,2 ergibt, und welche anstelle üblicher Nickelhydroxidelektroden eingesetzt worden waren, gegenüber Eisenverunreinigungen immun. Diese Unempfindlichkeit zeigte sich darin, daß im Zyklenversuch die Stromausbeuten bei den Doppelhydroxid-Elektroden von Anfang an höher lagen und mit wachsender Zyklisierungsdauer viel weniger rückläufig waren als bei entsprechenden Vergleichselektroden aus 100 % eisenfreiem $Ni(OH)_2$.

Ein ähnliches Verhalten hatten auch Doppelhydroxid-Elektroden gezeigt, welche aufgrund ihrer präparativen Herstellung durch Simultanfällung von $Ni^{2+}$- und $Fe^{3+}$-Ionen aus Lösungen der entsprechenden Metallsalze mittels Kalilauge $SO_4$ oder $CO_3$ anstelle von $NO_3$ enthielten, wobei in diesem Falle Nickelsulfat bzw. Nickelkarbonat neben den entsprechenden Eisenverbindungen als Ausgangsmaterial eingesetzt wurde.

Es wurde u.a. auch gefunden, daß der als reines $Ni(OH)_2$ berechnete Ni-Anteil im Doppelhydroxid zumindest am Anfang des Zyklentests eine Stromausbeute liefert, welche der theoretischen Faraday-Ausbeute von 289 mAh/g $Ni(OH)_2$ sehr nahekommt, was vermuten läßt, daß das Nickel in Gegenwart des an den Redox-Vorgängen selbst nicht beteiligten Eisens über die 3wertige Stufe hinaus aufgeladen wird.

Dem von allen schädlichen Einwirkungen des Eisens offenbar unberührten Verhalten der positiven Doppelhydroxid-Elektrode wurde durch die Namensgebung "siderophile Elektrode" (siderophil = eisenfreundlich) Rechnung getragen.

Indessen blieb der Wunsch nach einer besseren Kapazitätsausbeute auch über längere Zyklenlebensdauern hinweg, was ein dringendes Anliegen der Praxis ist, bestehen. Der Erfindung liegt daher die Aufgabe zugrunde, eine positive Sammlerelektrode der besprochenen und im Oberbegriff von Anspruch 1 formulierten Gattung anzugeben, die in dem vorgenannten Sinne "siderophil" ist und gegenüber bereits bekannten Modifikationen hinsichtlich der chemischen Zusammensetzung eine bessere Zyklenfestigkeit aufweist.

Die Aufgabe wird erfindungsgemäß dadurch gelöst, daß $X^{n-}$ zumindest zu einem Teil von $PO_4^{3-}$ bzw. $HPO_4^{2-}$ gebildet ist.

Tatsächlich führt die spezielle Wahl von $PO_4^{3-}$ für $X^{n-}$, welches an sich durch beliebige Anionen vertreten sein kann, zu einem überraschend günstigen Ergebnis, wobei der molare Anteil des $PO_4^{3-}$ an $X^{n-}$ erfindungsgemäß zwischen den Grenzen 30 % und 100 % liegen soll.

Eine besonders vorteilhafte Wirkung wird durch einen Phosphat-Anteil an $X^{n-}$ zwischen 40 % und 60 % erzielt. Das vorzugsweise Aktivmaterial der erfindungs gemäßen Sammlerelektrode ist somit ein Doppelhydroxid nach der eingangs angegebenen Formel, dessen Anion $X^{n-}$ etwa zur Hälfte von $PO_4^{3-}$ gebildet ist, während die andere Hälfte aus einer anderen Anionart, z.B. $SO_4^{2-}$, besteht.

Ein erfindungsgemäß bevorzugtes Doppelhydroxid liegt weiterhin vor, wenn der Laufparameter $x = 0,2$ ist und $M^{2+} = Ni^{2+}$ oder $Co^{2+}$ ist.

Die präparative Darstellung eines erfindungsgemäßen M, Fe-Doppelhydroxids, eines Ni, Fe-Doppelhydroxids beispielsweise, erfolgt durch Simultanfällung von $Ni^{2+}$- und $Fe^{3+}$-Ionen in Gegenwart von $PO_4^{3-}$-Ionen aus einer Salzlösung mit Lauge. Je nach gewünschter Zusammensetzung des Fällungsprodukts ($0,05 \leq x \leq 0,4$) kommt z.B. eine phosphorsaure Lösung von Nickelsulfat und Eisensulfat zum Einsatz, deren Molverhältnis so ausgewählt ist, daß sich ein Atomverhältnis Ni/Fe im Doppelhydroxid zwischen den Grenzen 95/5 und 60/40, vorzugsweise von etwa 80/20 einstellt. Das Molverhältnis der $Ni^{2+}$- und $Fe^{3+}$-Ionen in der Fällösung liegt dementsprechend zwischen 19:1 und 1,5:1.

Bei einem laboratoriumsmäßigen Ansatz wurde z.B. eine mit Phosphorsäure $H_3PO_4$ (0,191 mol/l) angesäuerte Lösung von Nickelsulfat (0,763 mol/l) und Eisen(III)sulfat (0,191 mol/l) mit Kalilauge (5,52 mol/l) in einer Vorlage gefällt, in der sich Kaliumsulfat (0,76 mol/l) befand.

Zur Durchführung der Fällung unter den Bedingungen pH = 12,5; Temperatur 304-306 K diente ein auf 305 K thermostatisierter Mehrhalsglaskolben, in dem sich eine wäßrige KOH-Lösung mit dem für die Fällung vorgesehenen pH-Wert befand. In diesen wurde gleichzeitig mit der $PO_4$-haltigen Metallsalzlösung carbonatfreie 1-bis 3molare KOH-Lösung unter Rühren mit Hilfe von Membranpumpen gespritzt. Abweichungen des pH-Werts vom Sollwert 12,5 wurden automatisch mit verdünnter Kalilauge oder 1molarer Phosphorsäure auf einen Toleranzbereich +/- 0,1 pH-Einheiten korrigiert.

Nach dem Ende der Fällung wurde die Suspension noch 8 bis 10 Stunden gerührt. Anschließend kam das Reaktionsprodukt über eine Schlauchleitung direkt in eine mit Stickstoff durchspülte Glove-Box und wurde dort in verschließbare Zentrifugenbecher aus Polypropylen eingefüllt und außerhalb der Box in einer Laborzentrifuge bei 3.000 U/min. 10 Minuten lang zentrifugiert. Nach etwa viermaligem Waschen der Proben mit KOH-Lösung vom pH-Wert der Fällungsreaktion oder ggf. mit doppelt destilliertem Wasser wurde das gereinigte Produkt innerhalb der Box in einen Exsikkator gebracht und drei Tage lang bei Raumtemperatur und 10 mbar getrocknet.

Eine Variante der Fällungsbedingungen für ein erfindungsgemäßes Doppelhydroxid besteht darin, daß die Fällung der Metallsalze am pH-Wert des isoelektrischen Punktes des Hydroxids vom jeweiligen $M^{2+}$-Ion durchgeführt wird. Auch in diesem Fall sichert ein Thermostat die bevorzugte Reaktionstemperatur von 304 K bis 306 K gegen Temperaturschwankungen, die +/- 1 K übersteigen, ab.

Poröse Sinterkörper als Elektrodenträgergerüste sind einer Imprägnierung mit dem erfindungsgemäßen Doppelhydroxid als aktivem positiven Material ebenfalls zugänglich. In Anlehnung an die bekannte Verfahrenstechnologie bei der Herstellung von Sinterfolienelektroden werden auch hier Sammlerelektroden durch ein- oder mehrmaliges Tränken des Sintergerüstes mit der durch $H_3PO_4$ angesäuerten, $Ni^{2+}$ bzw. $Co^{2+}$ und $Fe^{3+}$ enthaltenden Metallsalzlösung und durch anschließendes Tauchen in Alkalilauge erhalten.

Es liegt weiterhin im Rahmen der Erfindung, die Tränkung mit einer phosphorsauren Schmelze beider Metallsalze durchzuführen und das Doppelhydroxid nach dem Erstarren der Schmelze durch Alkalisieren zur Ausfällung zu bringen.

Die Imprägnierung mittels wässriger Metallsalzlösungen erlaubt es schließlich auch, die Fällung in

3

Sinterelektroden auf elektrochemische Weise vorzunehmen. Bei dem Elektrolyseprozeß ist der poröse Sinterkörper als Kathode geschaltet. Dadurch werden Wasserstoff-Ionen verbraucht und die in den Poren befindlichen Kationen in Form des Doppelhydroxids niedergeschlagen.

Das nach dem weiter oben angegebenen Ansatz hergestellte Doppelhydroxid läßt sich durch die Bruttoformel

$[Ni_4Fe(OH)_{10}]1/2SO_4^{2-}; 1/3PO_4^{3-};1/2 HPO_4^{2-} \cdot aq]$

beschreiben. Eine chemische Analyse des Präparates hatte das in Tabelle 1 zusammengestellte Ergebnis. Vergleichssubstanz ist $\beta$ - $Ni(OH)_2$.

Tabelle 1

| Probe | Theoret.ber. % | | | | Gefunden Gew.% | | | | Chem. Zusammensetzung mol. Verh. |
|-------|------|------|------|------|------|------|------|------|------|
| | $Ni^{2+}$ | $Fe^{3+}$ | $SO_4^{2-}$ | $PO_4^{3-}$ | $Ni^{2+}$ | $Fe^{3+}$ | $SO_4^{2-}$ | $PO_4^{3-}$ | |
| Ni/Fe/PO$_4$ Ni(OH)$_2$ | 43.5 68.7 | 10.3 | 8.9 | 5.9 | 38.0 60.0 | 8.7 | 6.5 | 5.8 | 4,1 :1 : 0,4:0,4 |

Außer durch die chemische Analyse konnte das erfindungsgemäße Doppelhydroxid durch sein Röntgendiagramm (Cu K$\alpha$-Strahlung) charakterisiert werden. Dieses zeigt die verbreiterten Peaks des Pyroaurittyps. Die Gitterkonstanten liegen im charakteristischen Größenordnungsbereich für diesen Strukturtyp: a = 308 pm, c = 2418 pm.

Zur Untersuchung des elektrochemischen Verhaltens und insbesondere der Eisenresistenz des erfindungsgemäßen Doppelhydroxids wurden während zyklischer Ladungen und Entladungen die spezifischen Entladekapazitäten (mAh/g) gemessen und mit denen anderer Doppelhydroxide mit $X^{n-} \neq PO_4^{3-}$ (im folgenden durch Kurzformeln Ni/Fe-SO$_3$ oder Ni/Fe-NO$_3$ bezeichnet) verglichen. Die Vergleichssubstanzen waren völlig analog der Probesubstanz, nur unter Verwendung schwefel- bzw. salpetersaurer Metallsalzlösungen anstelle einer phosphorsauren Lösung hergestellt, und das Atomverhältnis Ni/Fe = 80/20 war bei allen Substanzen das gleiche.

Als Versuchselektroden dienten Teströhrchen von ca. 10 cm Länge und 1 cm Durchmesser, in denen sich ein Gemisch von jeweils 2,9 g Probesubstanz und 7 g Nickelpulver als Leitmaterial mit einem Nickelstab als Ableitung befand. Diese Versuchselektroden wurden im Zentrum eines Plexiglaszylinders plaziert, der an seiner Innenseite mit überdimensionierten negativen Gegenelektroden ausgekleidet war. Gegenelektrode war entweder eine bereits stark korrodierte Fe/Fe(OH)$_2$-Elektrode, um eine Eisenvergiftung zu forcieren, oder eine Cd/Cd(OH)$_2$-Elektrode vom Sinterfolientyp. Als Elektrolyt diente 30 %ige KOH-Lösung. Die Strombedingungen waren stets: 600 oder 700 Minuten lang mit 100 mA laden, mit mA bis zum Erreichen einer Zellspannung von 1 V bzw. bis zu einem Potential von 0,1 V gegen Hg/HgO entladen.

Während die erfindungsgemäße Ni/Fe-PO$_4$-Elektrode gegenüber der negativen Fe/Fe(OH)$_2$-Elektrode ein gleiches Verhalten wie die Ni/Fe-SO$_4$- und die Ni/Fe-NO$_3$-Elektrode zeigte, waren ihre spezifischen Entladekapazitäten mit der Cd/Cd(OH)$_2$-Gegenelektrode bei weitem höher als die der nicht erfindungsgemäßen Elektroden. Tabelle 2 gibt eine Übersicht über diese Messungen.

4

Tabelle 2

| Vergleich der Entladekapazität (mAh/g) der Ni/Fe-PO$_4$-Elektrode mit der Ni/Fe-SO$_4$- und der Ni/Fe-NO$_3$-Elektrode. | | | |
|---|---|---|---|
| Zyklus Nr. | Ni/Fe-PO$_4$ (erfindungsgemäß) mAh/g | Ni/Fe-SO$_4$ mAh/g | Ni/Fe-NO$_3$ mAh/g |
| 10 | 196 | 234 | 209 |
| 30 | 209 | 214 | 172 |
| 50 | 239 | 199 | 164 |
| 70 | 234 | 185 | 155 |
| 100 | 222 | 168 | - |
| 150 | 219 | - | - |

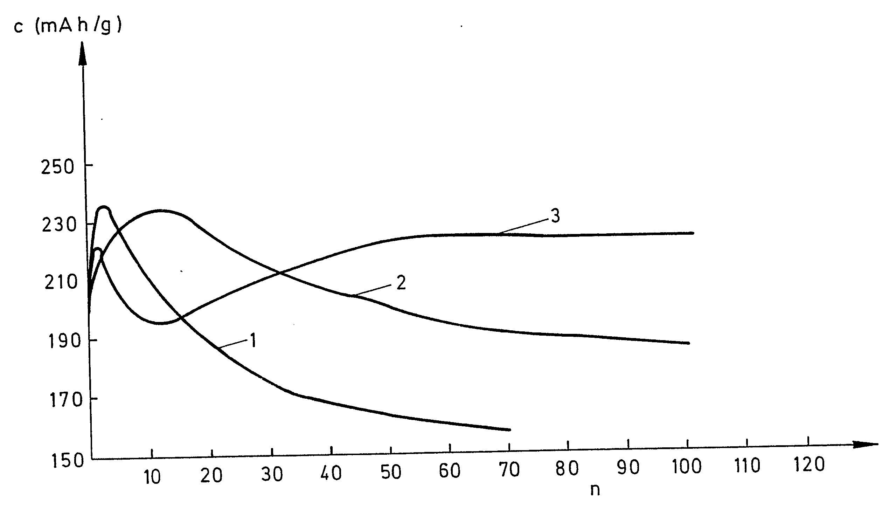

Die Figur zeigt den Inhalt der Tabelle 2 als Graphik. Darin bedeuten

n = Zyklus-Nr.

c(mAh/g) = spezifische Entladekapazität

1 = $[Ni_4Fe(OH)_{10}][NO_3^-$. aq] als positive Elektrode

2 = $[Ni_4Fe(OH)_{10}][1/2\ SO_4^{2-}$. aq] als positive Elektrode

3 = $[Ni_4Fe(OH)_{10}][1/2\ SO_4^{2-};\ 1/3\ PO_4^{3-};1/2\ HPO_4^{2-}$• aq] als positive Elektrode (erfindungsgemäß)

Hierbei fällt die wesentlich höhere Zyklenstabilität der phosphathaltigen Elektrode auf. Damit besitzt diese Elektrode gegenüber den anderen Elektroden mit $SO_4^{2-}$ bzw. NO $_3^-$in der Doppelhydroxid-Zwischenschicht einen entscheidenden Vorteil. Ein weiterer Vorteil besteht darin, daß die erfindungsgemäße Doppelhydroxid-Masse mit größerer Toleranz hergestellt werden kann, wobei die Verwendung konzentrierterer Lösungen möglich ist.

Die Immunität gegenüber Eisenoxidaquaten, die Siderophilität, bleibt erhalten. Ebenfalls wie bei den anderen Doppelhydroxiden werden bis zu 40 Gew.% Nickelhydroxid eingespart.

Eine abschließende gitterenergetische Betrachtung mag den ausgeprägten "Phosphat"-Effekt bzw. "Hydrogenphosphat"-Effekt der erfindungsgemäßen siderophilen Mischhydroxidelektrode erklären:

Der elektrochemische Redoxprozeß bei Nickelhydroxidelektroden läuft als ein Protonen/Elektronen-Austauschmechanismus ab. Dabei ist der Protonenaustausch gemäß $Ni(OH)_2 \rightarrow Ni\ OOH + e^- + H^+$ nur über den Elektrolyten möglich. Durch die Dotierung des Nickelhydroxids mit $M^{3+}$-Ionen wird dieser Mechanismus erleichtert, weil sich nunmehr protonische Zustände ausbilden, die energetisch unterscheidbar sind und den Protonen-Austausch-Mechanismus begünstigen.

Wie bereits im einleitenden Teil über die Pyrauritstruktur ausgeführt wurde, verursacht der in die Hauptschichten eingebrachte positive Ladungsüberschuß eine Verringerung der Bindungsstärke der Hydroxydionen einer Hauptschicht, was andererseits zu einer stärkeren Anbindung des Hydroxid-H-Atoms an eines der in der ungeordneten Zwischenschicht befindlichen sauerstoffhaltigen Anionen, wie z.B. $OH^-$, $NO_3^-$, $SO_4^{2-}$, $PO_4^{3-}$ sowie $H_2O$, führt. Diese Ausbildung von Wasserstoffbrückenbindungen bedeutet eine Erhöhung der protonischen Verfügbarkeit in den Zwischenschichten.

Außerdem wird die elektronische Leitfähigkeit durch das Vorhandensein von $M^{2+}$ und $M^{3+}$ an gleichen kristallographischen Stellen erhöht.

Wegen der kleineren formalen Ladung am P-Atom der $PO_4^{3-}$-Gruppe im Vergleich mit der höheren formalen Ladung am S-Atom der $SO_4^{2-}$-Gruppe bilden nun jene etwas stärkere Wasserstoffbrückenbindungen als diese. Da sowohl $SO_4^{2-}$-als auch $PO_4^{3-}$-Gruppen in die anionische Zwischenschicht der hier beschriebenen Nickel hydroxidelektrode eingebaut sind, resultiert in dieser Zwischenschicht ein breiteres Spektrum von Protonen-Energiezuständen, die sich auf den Protonenaustausch günstig auswirken müssen. Dies wird durch das Experiment bestätigt.

Durch $PO_4^{3-}$ bzw. $HPO_4^{2-}$ werden mithin zusätzlich protonische Zustände eingeführt, die das Arbeitspotential der Elektrode herabsetzen, während das $O_2$-Abscheidungspotential unverändert bleibt: das Phosphat wirkt als "physikalischer Fänger".

Auch dies ist ein Grund, weshalb die höhere Oxidationszahl des Nickels im phosphathaltigen Ni/Fe-Hydroxid, repräsentiert durch größere Entladekapazitäten, über viel mehr Zyklen aufrechterhalten wird als bei den $NO_3^-$-bzw. $SO_4^{2-}$-haltigen Doppelhydroxiden.

EP 0 336 245 A2

### Ansprüche

1. Positive Sammlerelektrode für Akkumulatoren mit alkalischem Elektrolyten, deren aktive Masse im ungeladenen Zustand ein Doppelhydroxid der allgemeinen Formel

$$[M^{2+}_{(1-x)}Fe^{3+}_{x}(OH)_2]^{x+}[(x/n)X^{n-},yH_2O]^{x-}$$

ist, in welcher der Laufparameter x Werte zwischen 0,05 und 0,4 annehmen kann, wobei $M^{2+}$ ein oxidier- und reduzierbares Kation und $X^{n-}$ ein Anion zur Ladungskompensation des komplexen doppelhydroxidischen Kations ist, dadurch gekennzeichnet, daß $X^{n-}$ mindestens zu einem Teil von $PO_4^{3-}$ bzw. $HPO_4^{2-}$ gebildet ist.

2. Positive Sammlerelektrode nach Anspruch 1, dadurch gekennzeichnet, daß der molare Anteil von $PO_4^{3-}$ an $X^{n-}$ in den Grenzen 30 bis 100 %, vorzugsweise bei 40-60 % liegt.

3. Positive Sammlerelektrode nach Anspruch 1 oder 2, dadurch gekennzeichnet, daß $X^{n-}$ neben dem $PO_4^{3-}$-Anteil von einer der Anionarten $SO_4^{2-}$ oder $NO_3^{-}$ gebildet ist.

4. Positive Sammlerelektrode nach mindestens einem der Ansprüche 1 bis 3, dadurch gekennzeichnet, daß der Laufparameter x = 0,2 ist.

5. Positive Sammlerelektrode nach mindestens einem der Ansprüche 1 bis 4, dadurch gekennzeichnet, daß $M^{2+} = Ni^{2+}$ ist.

6. Positive Sammlerelektrode nach mindestens einem der Ansprüche 1 bis 4, dadurch gekennzeichnet, daß $M^{2+} = Co^{2+}$ ist.

7. Positive Sammlerelektrode nach einem oder mehreren Ansprüchen 1 bis 6, dadurch gekennzeichnet, daß das Doppelhydroxid eine Doppelschichtstruktur besitzt, die derjenigen des Minerals Pyroaurit entspricht.

8. Positive Sammlerelektrode nach einem oder mehreren der Ansprüche 1 bis 7, dadurch gekennzeichnet, daß ihre aktive Masse eisenfreundlich, d.h. siderophil ist.

9. Positive Sammlerelektrode nach einem oder mehreren der Ansprüche 1 bis 8, dadurch gekennzeichnet, daß ihrer aktiven Masse Leitmittel beigemischt sind.

10. Verfahren zur Herstellung eines Doppelhydroxids als aktives Material für eine positive Sammlerelektrode nach einem der Ansprüche 1 bis 9, dadurch gekennzeichnet, daß aus einer mit Phosphorsäure $H_3PO_4$ angesäuerten Salzlösung, die $M^{2+}$-Ionen und $Fe^{3+}$-Ionen enthält, das Doppelhydroxid mittels Alkalilauge bei einem pH-Wert um 12,5 und bei einer Temperatur von 304 bis 306 K ausgefällt wird, wobei die Fällösung die $M^{2+}$ und $Fe^{3+}$-Ionen in einem Molverhältnis zwischen 19:1 und 1,5:1 enthält und die Phosphorsäurekonzentration der Fällösung so groß ist, daß das im Doppelhydroxid enthaltene Anion $X^{n-}$ zu einem Anteil von 30 bis 100 Mol% von $PO_4^{3-}$ bzw. $HPO_4^{2-}$ gebildet wird.

11. Verfahren nach Anspruch 10, dadurch gekennzeichnet, daß die mit $H_3PO_4$ angesäuerte Salzlösung und die Alkalihydroxidlösung pH-gesteuert unter Rühren in einer Vorlage mit definiertem pH-Wert eingeleitet werden, wobei der pH-Wert der dabei entstehenden Fällungssuspension um nicht mehr als +/- 0,1 pH-Einheiten vom Sollwert abweicht.

12. Verfahren zur Herstellung eines Doppelhydroxids als aktives Material für eine positive Sammlerelektrode nach einem der Ansprüche 1 bis 9, dadurch gekennzeichnet, daß aus einer mit $H_3PO_4$ angesäuerten Salzlösung, die $M^{2+}$-Ionen und $Fe^{3+}$-Ionen enthält, das Doppelhydroxid mittels Alkalilauge am pH-Wert des isoelektrischen Punktes des Hydroxids vom $M^{2+}$-Ion ausgefällt wird, wobei die Fällösung die $M^{2+}$- und $Fe^{3+}$-Ionen in einem Molverhältnis zwischen 19:1 und 1,5:1 enthält und die Phosphorsäurekonzentration der Fällösung so groß ist, daß das im Doppelhydroxid enthaltene Anion $X^{n-}$ zu einem Anteil von 30 bis 100 Mol% von $PO_4^{3-}$ bzw. $HPO_4^{2-}$ gebildet wird.

13. Verfahren nach Anspruch 12, dadurch gekennzeichnet, daß die Fällungsreaktion auf +/- 1 K thermostatisiert, vorzugsweise bei 304 bis 306 K durchgeführt wird.

14. Verfahren nach Anspruch 10, dadurch gekennzeichnet, daß die Fällung in Sinterelektroden durch ein- oder mehrmaliges Tränken mit der angesäuerten Metallsalzlösung und durch anschließendes Tauchen in Alkalilauge durchgeführt wird.

15. Verfahren zur Herstellung eines Doppelhydroxids als aktives Material für eine positive Sammlerelektrode nach einem der Ansprüche 1 bis 9, dadurch gekennzeichnet, daß ein Sinterelektrodengerüst mit einer Metallsalzschmelze, die $M^{2+}$-Ionen und $Fe^{3+}$-Ionen in einem Molverhältnis zwischen 19:1 und 1,5:1 enthält, getränkt wird, und daß nach dem Erstarren der Schmelze das Doppelhydroxid durch Alkalisieren zum Ausfällen gebracht wird.

6

16. Verfahren zur Herstellung eines Doppelhydroxids als aktives Material für eine positive Sammlerelektrode nach einem der Ansprüche 1 bis 9, dadurch gekennzeichnet, daß ein Sinterelektrodengerüst mit einer Metallsalzlösung, die $M^{2+}$-Ionen und $Fe^{3+}$-Ionen in einem Molverhältnis zwischen 19:1 und 1,5:1 enthält, getränkt wird, und daß das Doppelhydroxid durch eine elektrochemische Reaktion ausgefällt wird.